# EUROPÄISCHE PATENTSCHRIFT

(11) **EP 3 405 602 B1**
(45) Veröffentlichungstag und Bekanntmachung des Hinweises auf die Patenterteilung: **26.02.2020**
(21) Anmeldenummer: 17702564.0
(22) Anmeldetag: 25.01.2017
(51) Int. Cl.: C25B 1/00, C25B 1/10, C25B 9/08, C25B 9/18, C25B 15/08

(54) **VERFAHREN UND VORRICHTUNG ZUR ELEKTROCHEMISCHEN HERSTELLUNG VON SYNTHESEGAS**
PROCESS AND APPARATUS FOR ELECTROCHEMICAL PRODUCTION OF SYNTHESIS GAS
PROCÉDÉ ET DISPOSITIF DE FABRICATION DE GAZ DE SYNTHÈSE PAR VOIE ÉLECTROCHIMIQUE

(30) Priorität: 10.03.2016 DE 102016203947
(43) Veröffentlichungstag der Anmeldung: 28.11.2018
(73) Patentinhaber: Siemens Aktiengesellschaft, 80333 München (DE)
(72) Erfinder: HANEBUTH, Marc, 90482 Nürnberg (DE); BALDAUF, Manfred, 91056 Erlangen (DE); STARK, Katharina, 91052 Erlangen (DE)
(86) Internationale Anmeldenummer: PCT/EP2017/051472
(87) Internationale Veröffentlichungsnummer: WO 2017/153082

(56) Entgegenhaltungen:
- US-A- 3 959 094
- US-A1- 2013 175 181

## Beschreibung

Die vorliegende Erfindung betrifft ein Verfahren und eine Vorrichtung zum Betreiben einer Elektrolysevorrichtung zur Herstellung von Synthesegas mit einer Kohlenstoffdioxid-Elektrolysezelle und einer Wasser-Elektrolysezelle.

Die Nachfrage nach Strom schwankt im tagezeitlichen Verlauf stark. Auch die Stromerzeugung schwankt mit zunehmendem Anteil an Strom aus erneuerbaren Energien während des Tagesverlaufs. Um ein Überangebot an Strom in Zeiten mit viel Sonne und starkem Wind bei niedriger Nachfrage nach Strom ausgleichen zu können, benötigt man regelbare Kraftwerke oder Speicher, um diese Energie zu speichern.

Eine der derzeitig angedachten Lösungen ist das Umwandeln von elektrischer Energie in Wertprodukte, die insbesondere als Plattformchemikalien oder Synthesegas, welches Kohlenstoffmonoxid und Wasserstoff umfasst, dienen können. Eine mögliche Technik zur Umwandlung der elektrischen Energie in Wertprodukte stellt die Elektrolyse dar.

Die Elektrolyse von Wasser zu Wasserstoff und Sauerstoff stellt eine im Stand der Technik bekannte Methode dar. Aber auch die Elektrolyse von Kohlenstoffdioxid zu Kohlenstoffmonoxid wird seit einigen Jahren erforscht und es gibt Bemühungen, ein elektrochemisches System zu entwickeln, das eine Kohlenstoffdioxidmenge entsprechend des wirtschaftlichen Interesses reduzieren kann. Aktuell werden ca. 80 % des weltweiten Energiebedarfs durch die Verbrennung von fossilen Brennstoffen gedeckt, deren Verbrennungsprozesse eine weltweite Emission von etwa 34000 Millionen Tonnen Kohlenstoffdioxid in die Atmosphäre pro Jahr verursacht. Kohlenstoffdioxid gehört zu den sogenannten Treibhausgasen, deren negative Auswirkungen auf die Atmosphäre und das Klima diskutiert werden.

Eine Verwertung dieses Kohlenstoffdioxids ist daher wünschenswert. US 2013/0175181 A1 und US 3,959,094 offenbaren Vorrichtungen für die Elektrolyse von Kohlenstoffdioxid.

Eine vorteilhafte Bauform einer Elektrolyseeinheit ist ein Niedertemperatur-Elektrolyseur bei dem als Eduktgas Kohlenstoffdioxid mit Hilfe einer Gasdiffusionselektrode in einen Kathodenraum zudosiert wird. An einer Kathode der elektrochemischen Zelle wird das Kohlenstoffdioxid zu Kohlenstoffmonoxid reduziert und an einer Anode wird Wasser zu Sauerstoff oxidiert. Aufgrund von Diffusionslimitierungen an der Kathode kann es beim Einsatz eines wässrigen Elektrolyten neben der Bildung von Kohlenstoffmonoxid auch zur Bildung von Wasserstoff kommen, da das Wasser des wässrigen Elektrolyten ebenfalls elektrolysiert wird. Im derzeitigen Stand der Technik werden typischerweise maximal 70% des eingesetzten Kohlenstoffdioxids elektrochemisch umgesetzt. Nimmt man einen Umsatzgrad von Kohlenstoffdioxid von 50% an und beachtet man, dass die Faraday-Effizienz für Kohlenstoffmonoxid und Wasserstoff bei jeweils 50% liegt, ergibt sich ein Produktgas mit einer Zusammensetzung von Kohlenstoffmonoxid zu Wasserstoff zu Kohlenstoffdioxid im Verhältnis 1:1:1.

Als Wertprodukt zum Speichern elektrischer Energie ist aber ein Synthesegas, umfassend Wasserstoff und Kohlenstoffmonoxid, mit möglichst geringem Anteil an Kohlenstoffdioxid wünschenswert.

Es ist daher Aufgabe der vorliegenden Erfindung ein Verfahren und eine Vorrichtung anzugeben, wobei Synthesegas elektrochemisch mit einem möglichst geringen Kohlenstoffdioxidanteil bereitgestellt wird.

Diese Aufgabe wird mit einem Verfahren gemäß Anspruch 1 und einer Vorrichtung gemäß Anspruch 7 gelöst.

Üblicherweise umfasst ein Elektrolyseur wenigstens zwei Elektrolyse-Stacks, welche wiederum eine Vielzahl, insbesondere 100, Elektrolysezellen enthalten. Zur Vereinfachung wird die Erfindung anhand jeweils einer Kohlenstoffdioxid-Elektrolysezelle und einer Wasser-Elektrolysezelle beschrieben.

Vorteilhaft wird das erste Produktgas mithilfe der Absorption in der Gaswäschevorrichtung mittels des ersten und/oder zweiten Katholyts derart gereinigt, dass der Anteil des Kohlenstoffdioxids, welches nicht in der Kohlenstoffdioxid-Elektrolysezelle umgewandelt wurde, verringert wird. Der basische wässrige Katholyt ist ein sehr gutes Absorptionsmittel für das Kohlenstoffdioxid. In der Gaswäschevorrichtung wird also das erste Produktgas vorteilhaft mit dem ersten und/oder zweiten Katholyt gereinigt, so dass der Einsatz eines zusätzlichen Absorptionsmittels vorteilhaft vermieden wird. Die Reinigung des ersten Produktgases ermöglicht vorteilhaft die Herstellung eines reinen Synthesegases umfassend Kohlenstoffmonoxid und Wasserstoff.

Der Einsatz des ersten und/oder zweiten Katholyts als Absorptionsmittel wird durch eine Veränderung des pH-Werts der jeweiligen Katholytlösungen während der Elektrolyse ermöglicht. Die pH-Werte des ersten und/oder zweiten Katholyts werden jeweils während der Elektrolyse in der jeweiligen Elektrolysezelle basisch. Dieser Effekt basiert darauf, dass während der Elektrolyse Kationen, welche keine Protonen sind, durch die Membran vom Anolyt in den Katholyt permeieren. Diese Kationen umfassen überwiegend Kationen des Leitsalzes in dem Elektrolyten, insbesondere in einer wässrigen Elektrolytlösung wie eine wässrige Kaliumsulfatlösung oder eine wässrige Kaliumhydrogencarbonatlösung. Dieser pH-Effekt ist besonders groß, wenn der erste und/oder zweite Katholyt kein oder nahezu kein Kohlenstoffdioxid umfasst. Das Kohlenstoffdioxid führt zur Bildung von Kaliumhydrogencarbonat, welches den pH-Wert nahezu konstant hält, also eine puffernde Wirkung aufweist, da es die Hydroxidionen im Katholyt bindet. Insbesondere in der Wasser-Elektrolysezelle liegt kein Kohlenstoffdioxid vor, so dass der pH-Wert des zweiten Katholyts stark basisch wird. Aber auch bei der Kohlenstoffdioxid-Elektrolysezelle kann das Kohlenstoffdioxid getrennt vom Katholyt geführt werden, so dass das Kohlenstoffdioxid lediglich an einer Gasdiffusionselektrode reduziert wird und auch hier der Katholyt nahezu keinen Kontakt zu Kohlenstoffdioxid hat und basisch wird. Das Kohlenstoffdioxid kann dann insbesondere mit einem Überdruck im Vergleich zum ersten Katholyt in die Kohlenstoffdioxid-Elektrolysezelle gegeben werden, um den Kontakt weiter zu minimieren.

Das erste Produktgas umfassend Kohlenstoffmonoxid und das zweite Produktgas umfassend Wasserstoff werden erfindungsgemäß in ein gemeinsames Produktgas, also Synthesegas, zusammengeführt. Es ist aber auch möglich, das erste und zweite Produktgas erst in einem Reaktor zusammen zu führen. Es ist dann insbesondere vorteilhaft möglich, diese Gase abschnittsweise in unterschiedlichen Abschnitten des Reaktors in einem definierten Verhältnis zu dosieren. Vorteilhaft können so in einem Reaktor höhere Selektivitäten bzw. Ausbeuten erzielt werden. Im Vergleich zur konventionellen Herstellung eines Synthesegases aus fossilen Quellen, ist so das Einstellen eines beliebigen Verhältnisses von Kohlenstoffmonoxid zu Wasserstoff möglich.

In einer vorteilhaften Weiterbildung der Erfindung wird das erste Produktgas und das zweite Produktgas zu einem Synthesegas anteilig derart gemischt, dass das Synthesegas ein definiertes CO/H₂-Verhältnis in einem Bereich zwischen 1:1,4 und 1:10, insbesondere zwischen 1:1,4 und 1:3, aufweist. Vorteilhaft kann unabhängig voneinander der Wasserstoff und das Kohlenstoffmonoxid in den beiden Elektrolysezellen hergestellt werden. Durch die Wahl der Dimensionierung der jeweiligen Elektrolyseure, z. B. durch die Anzahl der Elektrolysezellen kann das Verhältnis aus Kohlenstoffmonoxid zu Wasserstoff festgelegt werden. Vorteilhaft kann eine präzise Anpassung an einen Zielwert mithilfe der Wahl der Elektrolysespannung der jeweiligen Elektrolysezelle erfolgen. Insbesondere bei der Kohlenstoffdioxid-Elektrolysezelle ist bekannt, dass in Abhängigkeit der Spannung und folglich auch des Stroms neben Kohlenstoffmonoxid auch Wasserstoff hergestellt wird. Es ist daher hier möglich, die Spannung oder den Strom derart zu wählen, dass insbesondere Kohlenstoffmonoxid produziert wird.

In einer vorteilhaften Ausgestaltung und Weiterbildung der Erfindung wird ein wässriger Elektrolyt in die erste Kohlenstoffdioxid-Elektrolysezelle als ein erster Katholyt und ein erster Anolyt geführt. Zusätzlich oder alternativ wird der wässrige Elektrolyt in die zweite Wasser-Elektrolysezelle als ein zweiter Katholyt und ein zweiter Anolyt geführt. Die Vorrichtung umfasst dann insbesondere einen Regenerationsbehälter für den Elektrolyten. Die Vorrichtung umfasst weiterhin wenigstens eine zweite Leitung vom Regenerationsbehälter in die Kohlenstoffdioxid-Elektrolysezelle und wenigstens eine fünfzehnte Leitung vom Regenerationsbehälter in die Wasser-Elektrolysezelle.

Vorteilhafterweise wird durch die Nutzung eines gemeinsamen Elektrolyts in der Kohlenstoffdioxid-Elektrolysezelle und der Wasser-Elektrolysezelle nur ein Elektrolytkreislauf benötigt. Auch wird nur ein Regenerationsbehälter benötigt. Der apparative Aufwand des Betreibens der zwei Elektrolysezellen wird somit verringert. Die Größe des Regenerationsbehälters kann im Verhältnis zur Umpumpgeschwindigkeit des Elektrolyten im optimalen Fall sogar so klein sein, dass ein Regenerationsbehältervolumen nahezu Null ist, und somit kein Regenerationsbehälter nötig ist. In diesem Fall reicht das Innenvolumen der Rohrleitungen, um etwaige Schwankungen des Elektrolyten auszugleichen.

In einer vorteilhaften Ausgestaltung und Weiterbildung der Erfindung werden der erste und zweite Katholyt und/oder der erste und zweite Anolyt in den Regenerationsbehälter zurückgeführt. In diesem Regenerationsbehälter wird sowohl der pH-Wert des ersten und zweiten Anolyts und des ersten und zweiten Katholyts ausgeglichen, insbesondere auf einen pH-Wert in dem Bereich von 8 bis 10, als auch das im Absorptionsmittel Katholyt gespeicherte Kohlenstoffdioxid freigesetzt. Dieses Kohlenstoffdioxid kann dann vorteilhaft wieder in die Kohlenstoffdioxid-Elektrolysezelle zurückgeführt werden. Dadurch kann der Umsatz des Kohlenstoffdioxids in der Kohlenstoffdioxid-Elektrolysezelle vorteilhaft erhöht werden.

In einer weiteren vorteilhaften Ausgestaltung und Weiterbildung der Erfindung wird als ein wässriger Elektrolyt ein Kalium und/oder Ammonium umfassender wässriger Elektrolyt verwendet. Insbesondere wird als ein Leitsalz Kaliumsulfat verwendet. Vorteilhaft wandert dann das Kaliumkation des Anolyts über die Membran des in den Katholyt während der Elektrolyse, sodass der Katholyt basisch und der Anolyt sauer wird. Dies unterstützt die Eigenschaft des Katholyts als Absorptionsmittel für Kohlenstoffdioxid. Insbesondere liegt das Leitsalz des wässrigen Elektrolyten in Konzentrationen im Bereich von 0,5 mol/l bis 1 mol/l.

In einer weiteren Ausgestaltung und Weiterbildung der Erfindung ist die erste Kathode eine Gasdiffusionselektrode. Besonders vorteilhaft kann in der Kohlenstoffdioxid-Elektrolysezelle die erste Kathode dann den Katholyt vom Eduktgas, dem Kohlenstoffdioxid, soweit trennen, dass das Kohlenstoffdioxid im Katholyt nicht zu einer puffernden Wirkung beiträgt. Somit wird der pH-Effekt im Katholyt unterstützt, was die Eigenschaften des Katholyts als Absorptionsmittels verbessert.

In einer weiteren vorteilhaften Ausgestaltung und Weiterbildung der Erfindung umfasst die Vorrichtung einen gemeinsamen Abscheidebehälter der Kohlenstoffdioxid-Elektrolysezelle und der Wasser-Elektrolysezelle für die jeweiligen Anodengase, insbesondere für Sauerstoff. Besonders vorteilhaft wird in beiden Elektrolysezellen als Anodengas Sauerstoff produziert. Dieser Sauerstoff kann in dem gemeinsamen Abscheidebehälter vorteilhaft vom Anolyt getrennt werden. Nach diesem Abtrennen kann der Anolyt vorteilhaft wieder in den Regenerationsbehälter zurückgeführt werden.

Weitere Ausgestaltungsformen und weitere Merkmale der Erfindung werden anhand der folgenden Figuren näher erläutert. Dabei handelt es sich um rein beispielhafte Ausgestaltungsformen und Merkmalskombinationen, die keine Einschränkung des Schutzbereiches bedeutet. Merkmale mit derselben Wirkungsweise und derselben Bezeichnung, aber in unterschiedlichen Ausgestaltungsformen werden dabei mit denselben Bezugszeichen versehen.

Dabei zeigen:

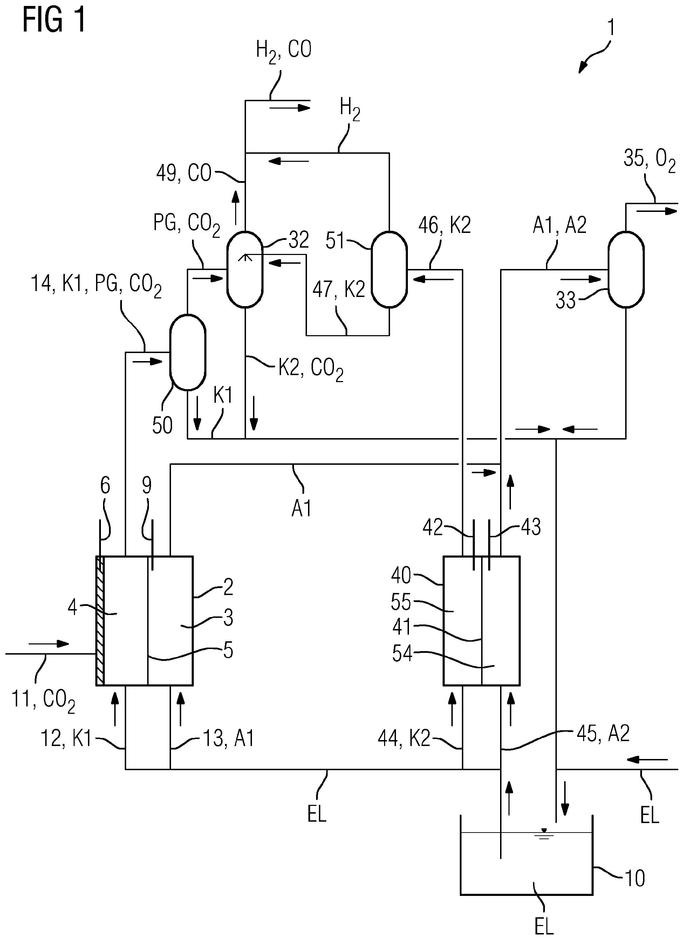

- Figur 1: eine Elektrolysevorrichtung mit einer Kohlenstoffdioxid-Elektrolysezelle und einer Wasser-Elektrolysezelle, wobei das erste Produktgas mittels des zweiten Katholyts gereinigt wird,
- Figur 2: eine Elektrolysevorrichtung mit einer Kohlenstoffdioxid-Elektrolysezelle und mit einer Wasser-Elektrolysezelle, wobei das erste Produktgas mittels des ersten und zweiten Katholyts gereinigt wird.

Die Elektrolysevorrichtung 1 umfasst eine Kohlenstoffdioxid-Elektrolysezelle 2. Die Kohlenstoffdioxid-Elektrolysezelle 2 umfasst einen ersten Anodenraum 3 und einen ersten Kathodenraum 4. Der erste Anodenraum 3 und der erste Kathodenraum 4 werden durch eine erste Membran 5 voneinander getrennt. Der erste Kathodenraum 4 umfasst eine erste Kathode 6. Der erste Anodenraum umfasst eine erste Anode 9. Die Anode 9 ist in diesem Beispiel direkt auf die erste Membran 5 aufgebracht. Es ist aber ebenso möglich, die erste Anode 9 in dem Anodenraum 3 anzuordnen. Vorteilhaft wird bei dem Aufbringen der Anode 9 auf die Membran 5 das benötigte Volumen des ersten Anolyts A1 verringert.

Die Wasser-Elektrolysezelle 40 umfasst einen zweiten Anodenraum 54 und einen zweiten Kathodenraum 55, welcher durch eine zweite Membran 41 voneinander getrennt werden. Der zweite Kathodenraum 55 umfasst eine zweite Kathode 42 und der zweite Anodenraum 54 umfasst eine zweite Anode 43.

Die Kohlenstoffdioxid-Elektrolysezelle 2 und die Wasser-Elektrolysezelle 40 werden von einem gemeinsamen Regenerationsbehälter 10 aus mit einem wässrigen Elektrolyt EL versorgt. Der wässrige Elektrolyt EL wird über eine zweite Leitung 12 als ein erster Katholyt K1 in den ersten Kathodenraum 4 geführt und über eine dritte Leitung 13 als ein erster Anolyt A1 in den ersten Anodenraum 3 geführt. Er wird weiterhin als ein zweiter Katholyt K2 und als ein zweiter Anolyt A2 jeweils in den zweiten Kathodenraum 55 und in den zweiten Anodenraum 54 der Wasser-Elektrolysezelle 40 geführt.

Zweckmäßigerweise werden beide Elektrolysezellen mit Spannung versorgt, so dass eine Elektrolyse stattfinden kann. Während der Elektrolyse wird in die Kohlenstoffdioxid-Elektrolysezelle 2 Kohlenstoffdioxid CO₂ über eine erste Leitung 11 zugeführt. In der Kohlenstoffdioxid-Elektrolysezelle 2 wird dieses Kohlenstoffdioxid CO₂ zu Kohlenstoffmonoxid CO reduziert. In Abhängigkeit der Spannung entsteht neben Kohlenstoffmonoxid CO auch Wasserstoff H₂. Weiterhin wird das Kohlenstoffdioxid CO₂ nicht vollständig umgesetzt, so dass neben dem Produktgas PG umfassend Kohlenstoffmonoxid CO auch Kohlenstoffdioxid CO₂ und Wasserstoff die Kohlenstoffdioxid-Elektrolysezelle 2 verlässt. Insbesondere wird die Spannung in diesem Ausführungsbeispiel derart gewählt, dass der Wasserstoffanteil im ersten Produktgas PG der Kohlenstoffdioxid-Elektrolysezelle 2 möglichst gering ist. Es wird insbesondere eine Spannung kleiner als 3V, weiter bevorzugt kleiner als 2,5V angelegt.

Zeitgleich wird in der Wasser-Elektrolysezelle 40 Wasser W zu Wasserstoff H₂ und Sauerstoff O₂ zerlegt. Der Wasserstoff H₂ verlässt über eine siebzehnte Leitung 46 den zweiten Kathodenraum 55 der Wasser-Elektrolysezelle 40. Auch der zweite Katholyt K2 verlässt über die siebzehnte Leitung 46 den zweiten Kathodenraum 55 der Wasser-Elektrolysezelle 40. In einer vierten Abtrennvorrichtung 51 werden der zweite Katholyt K2 und der Wasserstoff H₂ voneinander getrennt.

Das erste Produktgas PG, Kohlenstoffdioxid CO₂ und Wasserstoff H₂ getrennt werden aus der Kohlenstoffdioxid-Elektrolysezelle 2 in die dritte Abtrennvorrichtung 50 geführt. Dort wird der erste Katholyt K1 von der Gasphase mit dem ersten Produktgas PG, Kohlenstoffdioxid CO₂ und Wasserstoff H₂ getrennt. Das erste Produktgas PG, umfassend Kohlenstoffmonoxid CO, das Kohlenstoffdioxid CO₂ und der Wasserstoff H₂ werden in eine Gaswäschevorrichtung 32 geführt. Dort werden sie mit dem Katholyt K2 aus der Wasser-Elektrolysezelle 40 in Kontakt gebracht. Der zweite Katholyt K2 wird dann dazu verwendet, das nicht umgesetzte Kohlenstoffdioxid CO₂ des Produktgases PG der Kohlenstoffdioxid-Elektrolysezelle 2 abzutrennen.

Der zweite Katholyt K2 wurde zusammen mit dem Wasserstoff H₂ aus der Wasser-Elektrolysezelle 40 über eine siebzehnte Leitung 46 in die vierte Abtrennvorrichtung 51 geführt. In der vierten Abtrennvorrichtung 51 wurde der Wasserstoff H₂ vom zweiten Katholyt K2 getrennt. Der zweite Katholyt K2 wird anschließend über eine achtzehnte Leitung 47 in die Gaswäschevorrichtung 32 geführt. Dort wird der zweite Katholyt K2 als Absorptionsmittel für das nicht reduzierte Kohlenstoffdioxid CO₂ der Kohlenstoffdioxid-Elektrolysezelle 2 eingesetzt. Dies ist insbesondere dadurch möglich, dass der zweite Katholyt K2 während der Elektrolyse des Wassers W in der Wasser-Elektrolysezelle 40 basisch geworden ist. Der Einsatz eines nicht puffernden wässrigen Elektrolyten, insbesondere von Kaliumsulfat, bewirkt eine pH-Veränderung in der Elektrolysezelle. Während der Elektrolyse wandern Kationen, welche keine Protonen sind, insbesondere Kalium, über die zweite Membran 41. Dadurch wird der pH-Wert des zweiten Anolyts A2 sauer, der des zweiten Katholyts K2 basisch. Dieser basische Katholyt K2 eignet sich sehr gut als Absorptionsmittel für Kohlenstoffdioxid CO₂.

In der Gaswäschevorrichtung 32 erfolgt also das Kontaktieren des zweiten Katholyts K2 mit dem nicht reduzierten Kohlenstoffdioxid CO₂. Insbesondere sollte zwischen den beiden Phasen eine möglichst große Kontaktfläche vorhanden sein. Dafür kann entweder der zweite Katholyt K2 in der Gaswäschevorrichtung 32 versprüht werden. Es ist ebenso denkbar, dass in der Gaswäschevorrichtung 32 Füllkörper vorhanden sind oder die Gaswäschevorrichtung 32 eine Packung umfasst. Ebenso sind weitere verfahrenstechnische Maßnahmen zur Vergrößerung der Oberfläche in der Gaswäschevorrichtung 32 denkbar.

Das Kohlenstoffdioxid CO₂ absorbiert im zweiten Katholyt K2 und wird zusammen mit dem zweiten Katholyt K2 zurück in den Regenerationsbehälter 10 geführt. Das gereinigte Produktgas der Kohlenstoffdioxid-Elektrolysezelle 2, nämlich nahezu reines Kohlenstoffmonoxid CO kann anschließend mit dem Wasserstoff aus der Wasser-Elektrolysezelle 40, in einem Verhältnis gemischt werden, welches eine nachfolgende Reaktion benötigt. Es ist ebenso möglich, die beiden Gase an unterschiedlichen Stellen eines Reaktors getrennt voneinander hinzuzufügen. Dadurch kann vorteilhaft die Selektivität einer Reaktion optimiert werden.

Die Anodengase in beiden Elektrolysezellen sind Sauerstoff O₂. Sie werden gemeinsam mit dem ersten Anolyt A1 und dem zweiten Anolyt A2 in einer zweiten Abtrennvorrichtung 33 zusammengeführt. In der zweiten Abtrennvorrichtung 33 wird der Sauerstoff O₂ abgetrennt und über eine zwölfte Leitung 35 aus der Elektrolysevorrichtung 1 geführt. Die Anolyten A1 und A2 werden ebenfalls in den Regenerationsbehälter 10 zurückgeführt.

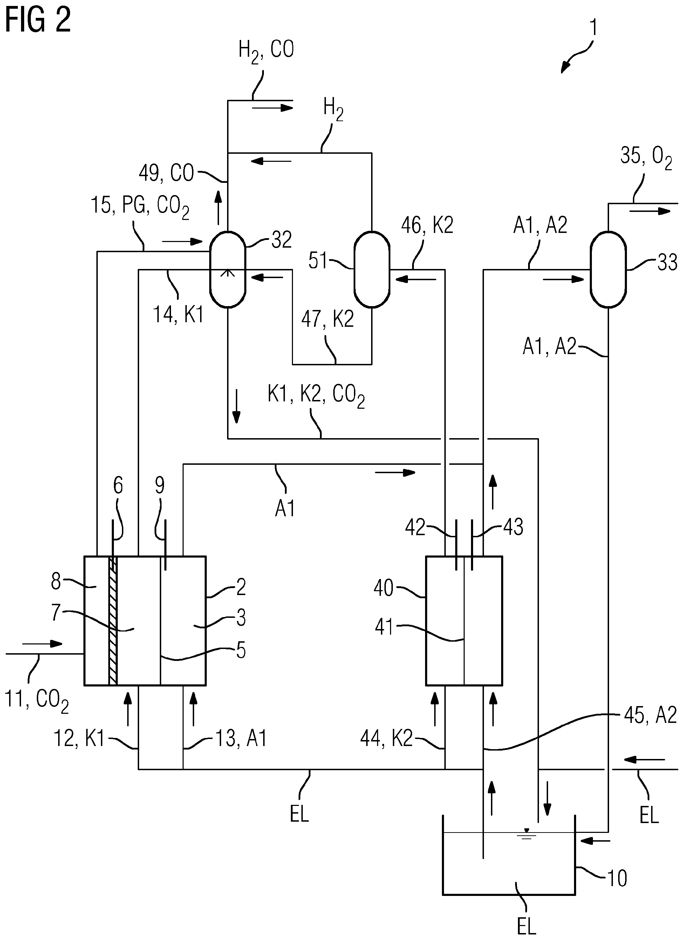

In Figur 2 ist ein weiteres Ausführungsbeispiel der Elektrolysevorrichtung 1 gezeigt. In diesem zweiten Ausführungsbeispiel wird das nicht umgesetzte Kohlenstoffdioxid sowohl mit dem ersten als auch mit dem zweiten Katholyten als Absorptionsmittel gereinigt.

Dabei umfasst die Elektrolysevorrichtung 1 eine Kohlenstoffdioxid-Elektrolysezelle 2 und eine Wasser-Elektrolysezelle 40. Der Aufbau der Kohlenstoffdioxid-Elektrolysezelle 2 unterscheidet sich allerdings vom Aufbau der Kohlenstoffdioxid-Elektrolysezelle 2 des ersten Beispiels. Die Kohlenstoffdioxid-Elektrolysezelle 2 umfasst im zweiten Ausführungsbeispiel eine Membran 5 mit einer ersten Anode 9, einem ersten Anodenraum 3, einem Kathodenteilraum 7 und einem zweiten Kathodenteilraum 8. Der erste und zweite Kathodenteilraum 7, 8 werden durch eine erste Kathode 6, insbesondere eine Gasdiffusionselektrode, voneinander getrennt.

Das Trennen des ersten Katholyts K1 vom Produkt- und Eduktgas ist möglich, da das Kohlenstoffdioxid CO₂ in den zweiten Kathodenteilraum 8 getrennt vom ersten Katholyt K1, der im ersten Kathodenteilraum 7 vorliegt, an der ersten Kathode 6 vorbeigeführt wird. Die Reaktion des Kohlenstoffdioxids CO₂ zu Kohlenstoffmonoxid CO findet an der ersten Kathode 6 in Kontakt zum ersten Katholyt K1 statt. Durch eine geringe Druckdifferenz zwischen dem Kohlenstoffdioxid CO₂ und dem ersten Katholyt K1, der relative Druck des Kohlenstoffdioxids CO₂ ist etwas größer, verbleibt der erste Katholyt K1 nahezu vollständig im ersten Kathodenteilraum 7. Typischerweise verlassen dann die gasförmigen Komponenten der Reaktion die Kohlenstoffdioxid-Elektrolysezelle 2 über die fünfte Leitung 15 aus dem zweiten Kathodenteilraum 8 und der erste Katholyt K1 über einen eine vierte Leitung 14 aus dem ersten Kathodenteilraum 7.

Die Wasser-Elektrolysezelle 40 umfasst eine zweite Membran 41, eine zweite Kathode 42 und eine zweite Anode 43. Auch die Wasser-Elektrolysezelle 40 benötigt zweckmäßigerweise eine Spannungsquelle. In einem Regenerationsbehälter 10 wird ein Elektrolyt EL vorgehalten. Dieses Elektrolyt EL wird sowohl in die Kohlenstoffdioxid-Elektrolysezelle 2 als auch in die Wasser-Elektrolysezelle 40 geführt. Der erste Katholyt K1 und der erste Anolyt A1 werden über eine zweite Leitung 12 und eine dritte Leitung 13 in die Kohlenstoffdioxid-Elektrolysezelle 2 geführt. Der Elektrolyt EL wird als zweiter Katholyt K2 über eine fünfzehnte Leitung 44 und als ein zweiter Anolyt A2 eine sechzehnte Leitung 45 in die Wasser-Elektrolysezelle 40 geführt.

In der Wasser-Elektrolysezelle 40 wird an der zweiten Kathode 42 Wasserstoff H₂ und an der zweiten Anode 43 Sauerstoff O₂ hergestellt. Der Wasserstoff H₂ verlässt zusammen mit dem zweiten Katholyt K2 die Wasser-Elektrolysezelle 40 über eine siebzehnte Leitung 46. In einer vierten Abtrennvorrichtung 51 wird der Wasserstoff H₂ vom zweiten Katholyt K2 getrennt.

Der zweite Katholyt K2 wird über eine achtzehnte Leitung 47 zur Gaswäschevorrichtung 32 geführt. Ebenso wird der erste Katholyt K1 zur Gaswäschevorrichtung 32 geführt. Das erste Produktgas PG mit dem nicht reduzierten Kohlenstoffdioxid CO₂ wird über eine fünfte Leitung 15 von der Kohlenstoffdioxid-Elektrolyse 2 in die Gaswäschevorrichtung 32 geführt. Dort werden der erste Katholyt K1 und der zweite Katholyt K2 als Absorptionsmittel für das Kohlenstoffdioxid CO₂ verwendet. Das Kohlenstoffdioxid CO₂ wird in dem ersten und zweiten Katholyt K1, K2 absorbiert, so dass das erste Produktgas PG nahezu rein von Kohlenstoffdioxid CO₂ ist.

Das gereinigte Produktgas PG, welches insbesondere Kohlenstoffmonoxid CO umfasst, verlässt über eine zwanzigste Leitung 49 die Gaswäschevorrichtung 32. Das Kohlenstoffmonoxid CO wird mit Wasserstoff H₂ aus der Wasser-Elektrolysezelle 40 gemischt. Es entsteht so ein Synthesegas. Vorteilhafterweise kann das Verhältnis von Kohlenstoffmonoxid CO zu Wasserstoff H₂ eingestellt werden. Bevorzugt

Das erste Anodengas A1 und das zweite Anodengas A2 werden zusammengeführt und gemeinsam in eine zweite Abtrennvorrichtung 33 geführt. Dort werden der erste Anolyt A1 und der zweite Anolyt A2 von dem Anodengas Sauerstoff getrennt. Sauerstoff O₂ verlässt über eine zwölfte Leitung 35 die zweite Abtrennvorrichtung 33.

Der erste und zweite Anolyt A1, A2 werden zurück in den Regenerationsbehälter 10 geführt. Der erste und zweite Katholyt K1, K2 beladen mit dem Kohlenstoffdioxid CO₂ werden in den Regenerationsbehälter 10 zurückgeführt. Dort erfolgt die Regeneration des Elektrolyten. Der pH-Wert der beiden Anolyten A1 und A2 und der beiden Katholyten K1 und K2 wird in einen pH-Bereich zwischen 8 und 10 ausgeglichen. Das absorbierte Kohlenstoffdioxid CO₂ wird freigesetzt und kann zurück in die Kohlenstoffdioxid-Elektrolysezelle 2 geführt werden.

## Patentansprüche

1. Verfahren zur elektrochemischen Herstellung von Synthesegas mit folgenden Schritten:
- Reduzieren von Kohlenstoffdioxid (CO₂) zu einem ersten Produktgas (PG) umfassend Kohlenstoffmonoxid (CO) in einer Kohlenstoffdioxid-Elektrolysezelle (2),
- Zerlegen von Wasser (W) zu einem zweiten Produktgas umfassend Wasserstoff (H₂) in einer Wasser-Elektrolysezelle (40),
wobei ein erster Katholyt (K1) von der Kohlenstoffdioxid-Elektrolysezelle (2) und/oder ein zweiter Katholyt (K2) von der Wasser-Elektrolysezelle (40) in eine Gaswäschevorrichtung (32) geführt werden und das erste Produktgas (PG) von nicht reduziertem Kohlenstoffdioxid (CO₂) in der Gaswäschevorrichtung (32) mittels des ersten (K1) und/oder zweiten Katholyts (K2) als Absorptionsmittel gereinigt wird, wobei das erste Produktgas (PG) und das zweite Produktgas zusammengeführt werden.

2. Verfahren nach Anspruch 1, wobei das erste Produktgas (PG) und das zweite Produktgas zu einem Synthesegas anteilig derart gemischt werden, dass das Synthesegas ein definiertes CO/H₂-Verhältnis in einem Bereich zwischen 1:1,4 bis zu 1:10 aufweist.

3. Verfahren nach einem der vorhergehenden Ansprüche, wobei ein wässriger Elektrolyt (EL) aus einem Regenerationsbehälter (10) in die Kohlenstoffdioxid-Elektrolysezelle (2) als der erste Katholyt (K1) und der erste Anolyt (A1) und/oder in die Wasser-Elektrolysezelle (40) als der zweite Katholyt (K2) und der zweite Anolyt (A2) geführt wird.

4. Verfahren nach Anspruch 3, wobei der erste und zweite Katholyt (K1, K2) und/oder der erste und zweite Anolyt (A1, A2) in den gemeinsamen Regenerationsbehälter (10) zurückgeführt werden.

5. Verfahren nach einem der Ansprüche 3 oder 4, bei dem das im Regenerationsbehälter (10) freigesetzte Kohlenstoffdioxid (CO₂) in die Kohlenstoffdioxid-Elektrolysezelle (2) zurückgeführt wird.

6. Verfahren nach einem der Ansprüche 3 bis 5, wobei als wässriger Elektrolyt (EL) ein Kalium und/oder Ammonium umfassender Elektrolyt, insbesondere ein Kaliumsulfat, verwendet wird.

7. Vorrichtung (1) zur elektrochemischen Herstellung von Synthesegas umfassend:
- wenigstens eine Kohlenstoffdioxid-Elektrolysezelle (2) zum Reduzieren von Kohlenstoffdioxid (CO₂) zu einem ersten Produktgas (PG) umfassend Kohlenstoffmonoxid (CO), wobei die Kohlenstoffdioxid-Elektrolysezelle (2) einen ersten Anodenraum (3) und einen ersten Kathodenraum (4) mit einer ersten Kathode (6) umfasst, wobei zwischen dem ersten Anodenraum (3) und dem ersten Kathodenraum (4) eine erste Membran (5) angeordnet ist,
- wenigstens eine Wasser-Elektrolysezelle (40) zum Reduzieren von Wasser (W) zu einem zweiten Produktgas umfassend Wasserstoff (H₂) mit einem zweiten Anodenraum (54) und einem zweiten Kathodenraum (55) mit einer zweiten Kathode (42), wobei zwischen dem zweiten Anodenraum (54) und dem zweiten Kathodenraum (55) eine zweite Membran (41) angeordnet ist,
- einer Gaswäschevorrichtung (32) mit einer vierten Leitung (14) vom ersten Kathodenraum (4) zur Gaswäschevorrichtung (32) und einer siebzehnten Leitung (46), einer vierten Abtrennvorrichtung (51) zum Abtrennen vom zweiten Katholyt und einer achtzehnten Leitung (47) vom zweiten Kathodenraum (55) zur Gaswäschevorrichtung (32),
- Reaktor zum Zusammenführen des ersten Produktgases (PG) und des zweiten Produktgases.

8. Vorrichtung (1) nach Anspruch 7, mit einem Regenerationsbehälter (10) zum Befüllen mit einem wässrigen Elektrolyten (EL),

9. Vorrichtung (1) nach Anspruch 8 mit wenigstens einer zweiten Leitung (12) vom Regenerationsbehälter (10) in die Kohlenstoffdioxid-Elektrolysezelle (2) und/oder wenigstens einer fünfzehnten Leitung (44) vom Regenerationsbehälter (10) in die Wasser-Elektrolysezelle (40).

10. Vorrichtung (1) nach einem der Ansprüche 7 bis 9, wobei die erste Kathode (K1) eine Gasdiffusionselektrode ist.

11. Vorrichtung (1) nach einem der Ansprüche 7 bis 10, mit einem gemeinsamen Abscheidebehälter (33) für ein Anodengas, insbesondere Sauerstoff (O₂

## Claims

1. Method of electrochemical production of synthesis gas, comprising the following steps:
- reducing carbon dioxide (CO₂) to a first product gas (PG) comprising carbon monoxide (CO) in a carbon dioxide electrolysis cell (2),
- splitting water (W) to give a second product gas comprising hydrogen (H₂) in a water electrolysis cell (40), wherein a first catholyte (K1) is guided from the carbon dioxide electrolysis cell (2) and/or a second catholyte (K2) from the water electrolysis cell (40) into a gas scrubbing apparatus (32), and the first product gas (PG) is freed of non-reduced carbon dioxide (CO₂) in the gas scrubbing apparatus (32) by means of the first catholyte (K1) and/or second catholyte (K2) as absorbent wherein the first product gas (PG) and the second product gas are combined.

2. Method according to Claim 1, wherein the first product gas (PG) and the second product gas are mixed to give a synthesis gas in proportions such that the synthesis gas has a defined CO/H₂ ratio within a range between 1:1.4 up to 1:10.

3. Method according to either of the preceding claims, wherein an aqueous electrolyte (EL) is guided from a regeneration vessel (10) into the carbon dioxide electrolysis cell (2) as the first catholyte (K1) and the first anolyte (A1) and/or into the water electrolysis cell (40) as the second catholyte (K2) and the second anolyte (A2).

4. Method according to Claim 3, wherein the first and second catholyte (K1, K2) and/or the first and second anolyte (A1, A2) are returned to the common regeneration vessel (10).

5. Method according to either of Claims 3 and 4, in which the carbon dioxide (CO₂) released in the regeneration vessel (10) is returned to the carbon dioxide electrolysis cell (2).

6. Method according to any of Claims 3 to 5, wherein the aqueous electrolyte (EL) used is an electrolyte comprising potassium and/or sodium, especially a potassium sulfate.

7. Apparatus (1) for electrochemical preparation of synthesis gas, comprising:
- at least one carbon dioxide electrolysis cell (2) for reducing carbon dioxide (CO₂) to a first product gas (PG) comprising carbon monoxide (CO), where the carbon dioxide electrolysis cell (2) comprises a first anode space (3) and a first cathode space (4) having a first cathode (6), where a first membrane (5) has been arranged between the first anode space (3) and the first cathode space (4),
- at least one water electrolysis cell (40) for reducing water (W) to a second product gas comprising hydrogen (H₂), comprising a second anode space (54) and a second cathode space (55) having a second cathode (42), where a second membrane (41) has been arranged between the second anode space (54) and the second cathode space (55),
- a gas scrubbing apparatus (32) having a fourth conduit (14) from the first cathode space (4) to the gas scrubbing apparatus (32) and a seventeenth conduit (46), a fourth separation device (51) for separation from the second catholyte and an eighteenth conduit (47) from the second cathode space (55) to the gas scrubbing apparatus (32),
- reactor for combining the first product gas (PG) and the second product gas,

8. Apparatus (1) according to Claim 7, having a regeneration vessel (10) for filling with an aqueous electrolyte (EL).

9. Apparatus (1) according to Claim 8, having at least one second conduit (12) from the regeneration vessel (10) into the carbon dioxide electrolysis cell (2) and/or at least one fifteenth conduit (44) from the regeneration vessel (10) into the water electrolysis cell (40).

10. Apparatus (1) according to any of Claims 7 to 9, wherein the first cathode (K1) is a gas diffusion electrode.

11. Apparatus (1) according to any of Claims 7 to 10, having a common separation vessel (33) for an anode gas, especially oxygen (O₂).

## Revendications

1. Procédé de production électrochimique de gaz de synthèse, comprenant les stades suivants :
- réduction du dioxyde de carbone (CO₂) en un premier produit (PG) gazeux comprenant du monoxyde de carbone (CO) dans une cellule (2) d'électrolyse de dioxyde de carbone,
- décomposition d'eau (W) en un deuxième produit gazeux comprenant de l'hydrogène (H₂) dans une cellule (40) d'électrolyse de l'eau, un premier catholyte (K1) étant envoyé de la cellule (2) d'électrolyse de dioxyde de carbone et/ou un deuxième catholyte (K2) de la cellule (40) d'électrolyse d'eau dans un dispositif (32) de lavage de gaz et le premier produit (PG) gazeux étant épuré de dioxyde de carbone (CO₂) non réduit dans le dispositif (32) de lavage de gaz au moyen du premier (K1) et/ou du deuxième catholyte (K2) comme agent d'absorption, le premier produit (PG) gazeux et le deuxième produit gazeux étant réunis.

2. Procédé suivant la revendication 1, dans lequel on mélange, en proportion, le premier produit (PG) gazeux et le deuxième produit gazeux en un gaz de synthèse, de manière à ce que le gaz de synthèse ait un rapport CO/H₂ défini dans un intervalle allant de 1 :1,4 à 1 :10.

3. Procédé suivant l'une des revendications précédentes, dans lequel on envoie un électrolyte (EL) aqueux d'un récipient (10) de régénération à la cellule (2) d'électrolyse de dioxyde de carbone comme premier catholyte (K1) et premier anolyte (A1) et/ou à la cellule (40) d'électrolyse d'eau comme deuxième catholyte (K2) et deuxième anolyte (A2).

4. Procédé suivant la revendication 3, dans lequel on retourne le premier et le deuxième catholyte (K1, K2) et/ou le premier et le deuxième anolyte (A1, A2) au récipient (10) de régénération commun.

5. Procédé suivant l'une des revendications 3 ou 4, dans lequel on retourne le dioxyde de carbone (CO₂) dégagé dans le récipient (10) de régénération à la cellule (12) d'électrolyse du dioxyde de carbone.

6. Procédé suivant l'une des revendications 3 à 5, dans lequel on utilise comme électrolyte (EL) aqueux un électrolyte contenant du potassium et/ou de l'ammonium, notamment un sulfate de potassium.

7. Installation (1) de production électrochimique de gaz de synthèse, comprenant :
- au moins une cellule (2) d'électrolyse de dioxyde de carbone pour réduire du dioxyde de carbone (CO₂) en un premier produit (PG) gazeux comprenant du monoxyde de carbone (CO), la cellule (2) d'électrolyse de dioxyde de carbone comprenant un premier compartiment (3) anodique et un premier compartiment (4) cathodique, ayant une première cathode (6), une première membrane (5) étant disposée entre le premier compartiment (3) anodique et le premier compartiment (4) cathodique,
- au moins une cellule (40) d'électrolyse d'eau pour réduire de l'eau (W) en un deuxième produit gazeux comprenant de l'hydrogène (H₂), ayant un deuxième compartiment (54) anodique et un deuxième compartiment (55) cathodique, ayant une deuxième cathode (42), une deuxième membrane (41) étant disposée entre le deuxième compartiment (54) anodique et le deuxième compartiment (55) cathodique,
- une installation (32) de lavage de gaz, comprenant un quatrième conduit (14) allant du premier compartiment (4) cathodique à l'installation (32) de lavage de gaz et un dix-septième conduit (46), une quatrième installation (51) de séparation pour séparer du deuxième catholyte, et un dix-huitième conduit (47) allant du deuxième compartiment (55) cathodique à l'installation (32) de lavage de gaz,
- un réacteur pour réunir le premier produit (PG) gazeux et le deuxième produit gazeux.

8. Installation (1) suivant la revendication 7, comprenant un récipient (10) de régénération à remplir d'un électrolyte (EL) aqueux.

9. Installation (1) suivant la revendication 8, comprenant au moins un deuxième conduit (12) allant du récipient (10) de régénération à la cellule (2) d'électrolyse de dioxyde de carbone et/ou au moins un quinzième conduit (14) allant du récipient (10) de régénération à la cellule (40) d'électrolyse d'eau.

10. Installation (1) suivant l'une des revendications 7 à 9, dans laquelle la première cathode (K1) est une électrode à diffusion de gaz.

11. Installation (1) suivant l'une des revendications 7 à 10, comprenant un récipient (33) de séparation commun pour un gaz d'anode, notamment de l'oxygène (O₂).
